**Europäisches Patentamt**

**European Patent Office**

**Office européen des brevets**

(11) Veröffentlichungsnummer: **0 191 014**
**A2**

## (12) EUROPÄISCHE PATENTANMELDUNG

(21) Anmeldenummer: 86890022.6

(22) Anmeldetag: 07.02.86

(51) Int. Cl.4: **A01B 33/02** , A01B 33/16

---

(30) Priorität: 08.02.85 AT 372/85

(43) Veröffentlichungstag der Anmeldung:
13.08.86 Patentblatt 86/33

(84) Benannte Vertragsstaaten:
CH DE FR IT LI

(71) Anmelder: Bombardier-Rotax-Wien Produktions- und Vertriebsgesellschaft m.b.H.
Donaufelder Strasse 73-79
A-1210 Wien(AT)

(72) Erfinder: Ranner, Dietrich, Dipl.-Ing.
In Schwaighofen-Egg
A-5301 Eugendorf Salzburg(AT)

(74) Vertreter: Krause, Ernst, Dipl.-Ing. et al
Krause, Ernst, Dipl.-Ing. Casati, Wilhelm, Dipl.-Ing
P.O. Box 234 Amerlingstrasse 8
A-1061 Wien VI(AT)

---

(54) Bodenbearbeitungsgerät.

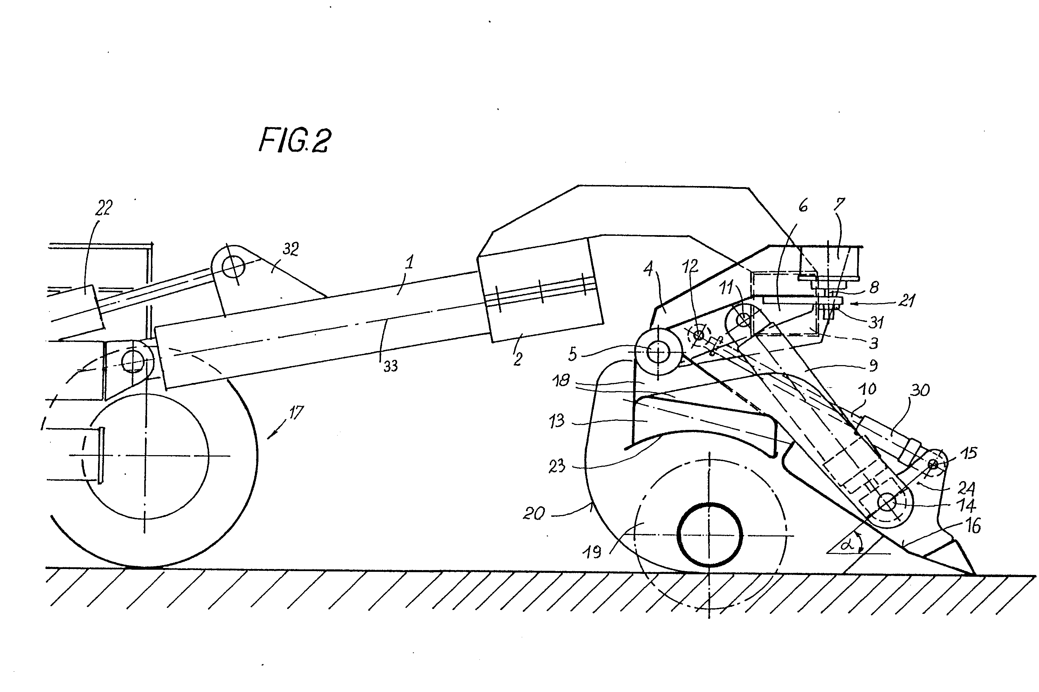

(57) Die Erfindung betrifft ein Bodenbearbeitungsgerät, das für landwirtschaftliche Böden eingesetzt werden kann und als Bodenlockerungsvorrichtung eine Fräse aufweist, der in Bewegungsrichtung des Bodenbearbeitungsgerätes ein Glättbrett nachgeschaltet ist. Das Bodenlockerungsgerät kann aus der Arbeitsstellung in eine Ruhestellung ver- schwenkt werden, wobei das Glättbrett seine Lage im wesentlichen unverändert beibehält. Zur Steuerung der Bewegung ist ein Gelenksviereck vorgesehen, wobei das Bodenlockerungsgerät mit einer der beiden Kurbeln des Gelenksvierecks fest verbunden ist und die zweite Kurbel mit dem Glättbrett verbunden ist, wobei das Glättbrett die Koppel des Gelenksvierecks bildet, dessen Gestell mit einem Halter fest verbunden ist, der sich im wesentlichen parallel zur Achse des Bodenbearbeitungsgerätes erstreckt und der an das Zugfahrzeug angeschlossen werden kann. - Fig. 2

FIG.2

EP 0 191 014 A2

## Bodenbearbeitungsgerät

Die Erfindung betrifft ein Bodenbearbeitungsgerät, mit einer Bodenlockerungsvorrichtung, die z.B. als Fräse ausgebildet ist, und einem Glättbrett, wobei die Bodenlockerungsvorrichtung und das Glättbrett mit einem ihnen gemeinsamen Halter in Verbindung stehen, der gegebenenfalls mit einem Kupplungsbalken, bevorzugt pendelnd, verbunden ist, der seinerseits mit einem Zugfahrzeug auf- und abschwenkbar kuppelbar ist, wobei die Bodenlockerungsvorrichtung über ein Schwenklager mit dem Glättbrett verbunden ist und durch Schwenken um dieses Lager aus der Arbeitsstellung in eine Ruhestellung bewegbar ist, in der sich die Bodenlockerungsvorrichtung im Abstand vom Boden befindet.

Geräte dieser Art eignen sich hervorragend zur Bearbeitung landwirtschaftlicher Böden, wobei die Bodenlockerungsvorrichtung, die bevorzugt als umlaufendes Werkzeug, z.B. als Fräse, ausgebildet ist, den Boden vor allem im Oberflächenbereich auflockert, wobei dann das Glättbrett für eine Einebnung des Bodens sorgt und den Boden z.B. für ein nachträgliches Säen vorbereitet. Ist eine pendelnde Verbindung zwischen dem Kupplungsbalken und dem Halter vorhanden, so kann sich das Gerät durch Pendeln um die Längsachse des Kupplungsbalkens dem Boden besonders gut anpassen, wobei auch die Höhenlage des Bodenbearbeitungsgerätes bezüglich des Zugfahrzeuges regulierbar ist, weil der Kupplungsbalken mit dem Zugfahrzeug, das beispielsweise als Traktor ausgebildet sein kann, auf- und abschwenkbar verbindbar ist.

Mit dem Gerät ist es auch möglich, nur Einebnungsarbeiten auszuführen, dies mittels des Glättbrettes bei hochgeschwenkter Bodenlockerungsvorrichtung.

Bodenbearbeitungsgeräte der eingangs erwähnten Art sind bereits bekanntgeworden. Um die Bodenlockerungsvorrichtung, die bei dem bekannten Gerät als umlaufende Fräse ausgebildet ist, um das am Glättbrett vorgesehene Schwenklager hochschwenken zu können, ist ein am Halter gelagerter Stellzylinder vorgesehen, dessen Kolben an seinem freien Ende an einem Schwenklager am Gehäuse der Bodenlockerungsvorrichtung angreift. Die Bodenlockerungsvorrichtung kann dabei ohne Lageänderung des Glättbrettes in eine unwirksame Stellung hochge- schwenkt werden, in der die Fräse zum Boden keinen Kontakt besitzt. Das Glättbrett seinerseits ist schwenkbar am Halter gelagert und kann durch eine weitere Kolben/Zylindereinheit um das Lager am Halter geschwenkt werden. Die am Glättbrett vorgesehenen beiden Schwenklager, nämlich das Schwenklager für die Bodenlockerungsvorrichtung und das Schwenklager, über welches das Glättbrett am Halter angelenkt ist, sind nur geringfügig voneinander beabstandet. Wird nun das Glättbrett verschwenkt, so tritt auch bei größeren Winkeländerungen zwischen Glättbrett und Boden nur eine geringfügige Lageänderung der Bodenlockerungsvorrichtung, also der Fräse, auf. Die Steuerung von Fräse und Glättbrett erfolgt bei der vorbekannten Einrichtung voneinander getrennt.

Das Gerät als solches ist daher sehr voluminös und infolge der voneinander unabhängigen Betätigungseinrichtungen für das Hochschwenken der Fräse einerseits und die Schwenkung des Glättbrettes anderseits, nur unter Beachtung besonderer Aufmerksamkeit seitens des Gerätefahrers einwandfrei zu bedienen.

Aufgabe der Erfindung ist es, hier Abhilfe zu schaffen und durch eine besondere Ausgestaltung der Kinematik eine leichte Bedienbarkeit mittels Steuerelementen, die bereits vorhanden sind, zu ermöglichen. Zu diesem Zwecke ist gemäß der Erfindung bei einem Bodenbearbeitungerät der eingangs erwähnten Art vorgesehen, daß die Bodenlockerungsvorrichtung mit einer der beiden Kurbeln eines Gelenksvierecks fest verbunden ist, wobei das Hauptlager dieser Kurbel mit dem Halter, bevorzugt fest, verbunden ist, daß das Glättbrett mit der Koppel dieses Gelenksvierecks fest verbunden ist, und daß das Hauptlager der zweiten am Glättbrett angreifenden Kurbel des Gelenksvierecks bevorzugt justierbar im Halter angeordnet ist. Durch diese Ausgestaltung ist es möglich, mittels eines einzigen Betägungsorganes, das beispielsweise als Kolben/Zylinderaggregat ausgebildet ist, die Bodenlockerungsvorrichtung hochzuschwenken, wobei dieses Kolben/Zylingeraggregat zwischen einem der Elemente des Gelenksvierecks und dem Halter angreifen kann. Die Elemente des Gelenksvierecks erfahren dabei beim Hochschwenken der Fräse aus der Arbeitsstellung in die Ruhelage keine Längenänderung, wobei als Kurbel immer der Abstand zwischen einem Hauptlager am Gestell des Gelenksvierecks und der zugeordneten Lagerstelle an der Koppel des Gelenksvierecks zu verstehen ist.

In weiterer Ausgestaltung der Erfindung ist vorgesehen, daß das justierbar im Halter angeordnete Hauptlager der Kurbel an einem, bevorzugt um die Lagerachse des Hauptlagers der anderen Kurbel des Gelenksvierecks, - schwenkbaren Hebel befestigt ist, der im Halter durch eine Feststelleinrichtung fixierbar ist. Durch diese Ausgestaltung ist es möglich, das Glättbrett gemeinsam mit der Bodenlockerungsvorrichtung lagemäßig auf unterschiedlichen Bodenneigungen zu justieren, wobei lediglich eine Schwenkbewegung des Gestelles des Gelenksvierecks ausgeführt zu werden braucht.

Eine weitere Ausführungsform des erfindungsgemäßen Bodenbearbeitungsgerätes ist dadurch gekennzeichnet, daß innerhalb des Schwenkbereiches des Gelenksvierecks zwischen Arbeits- und Ruhestellung des Bodenbearbeitungsgerätes, die Lage der Koppel des Gelenksvierecks annähernd unverändert bleibt, wobei bevorzugt die Lageabweichung ±5° nicht überschreitet. Diese Ausgestaltung des erfindungsgemäßen Bodenbearbeitungsgerätes stellt sicher, daß -obwohl die Bodenlockerungsvorrichtung und auch das Glättbrett Bestandteile des Gelenksvierecks sind - nämlich Kurbel bzw. Koppel des Gelenksvierecks - bei einem Hochschwenken der Bodenlockerungsvorrichtung die Lage des Glättbrettes zum Boden im wesentlichen beibehalten wird, also ein Hochschwenken der Bodenlockerungsvorrichtung nicht unbedingt eine Nachjustierung des Glättbrettes erforderlich macht, wenn dieses etwa auf einem Teil des Feldes eingesetzt wird, der nach einer Bearbeitung des übrigen Feldes mit Fräse und Glättbrett nur mehr eine Bearbeitung mit dem Glättbrett allein erforderlich macht.

Besonders vorteilhaft ist eine Ausgestaltung des Gelenksvierecks an dem erfindungsgemäßen Bodenbearbeitungsgerät, bei der der Längenunterschied zwischen den beiden Kurbeln des Gelenksvierecks höchstens 30% der Länge der längeren, die Bodenlockerungsvorrichtung tragenden Kurbel beträgt. Diese geringe Längendifferenz zwischen den Kurbeln stellt sicher, daß auch bei größerer Lageänderung der Kurbeln gegenüber dem Gestell, wie sie etwa bei einem Hochschwenken der Bodenlockerungsvorrichtung, die ja die eine Kurbel des Gelenksvierecks bildet, die Lage der Koppel annähernd unverändert bleibt, womit auch die Winkellage zwischen Glättbrett und Boden in etwa gleich bleibt.

Bevorzugt schließt in der Arbeitsstellung der Bodenlockerungsvorrichtung die Koppel mit einer Bodenparallelen, einen im Bereich zwischen 45° und 90° liegenden Winkel ein. Bevorzugt ist es, diesen Winkel etwa 60° betragen zu lassen, was durch entsprechende Justierung des Gelenksviereck möglich ist.

Um weiters sicherzustellen, daß sich bei einem Hochschwenken der Bodenlockerungsvorrichtung die Koppellage, wenn überhaupt, so nur geringfügig ändert, ist es zweckmässig, wenn in besonderer Ausgestaltung des erfindungsgemäßen Bodenbearbeitungsgerätes die Länge der längeren Kurbel ungefähr das 5 bis 6fache der Länge der Koppel beträgt.

Die Frästiefe bzw. die Eindringtiefe der Bodenlockerungsvorrichtung in den Boden kann dann eingestellt werden, wenn in besonderer Ausgestaltung der Erfindung die Länge jener Kurbel, die mit der Bodenlockerungsvorrichtung nicht fest verbunden ist, veränderbar ist. Hiebei ist es zweckmässig, wenn zur Längenänderung dieser Kurbel ein Stellglied, z.B. ein Hydraulikzylinder, vorgesehen ist.

Die Feststellvorrichtung für den Hebel, der das Gestell des Gelenksvierecks trägt, weist bevorzugt eine Schraubspindel auf, die den das eine Kurbelhauptlager tragenden Hebel durchsetzt, wobei auf die Schraubspindel eine am Hebel abgestützte Schraubmutter aufschraubbar ist. Der Verstellbereich ist dabei durch die Länge der Schraubspindel begrenzt. Die Schraubspindel kann bevorzugt an einem Gummipuffer befestigt sein, der seinerseits am Halter fixiert ist.

Die Erfindung wird nachstehend anhand eines in der Zeichnung beispielsweise dargestellten Bodenbearbeitungsgerätes näher erläutert. Es zeigen,

Fig. 1 eine Ansicht des erfindungsgemäßen Bodenbearbeitungsgerätes von hinten,

Fig. 2 einen Schnitt entlang der Linie 2-2, wobei auch die Verbindung des Bodenbearbeitungsgerätes mit einem Zugfahrzeug ersichtlich ist,

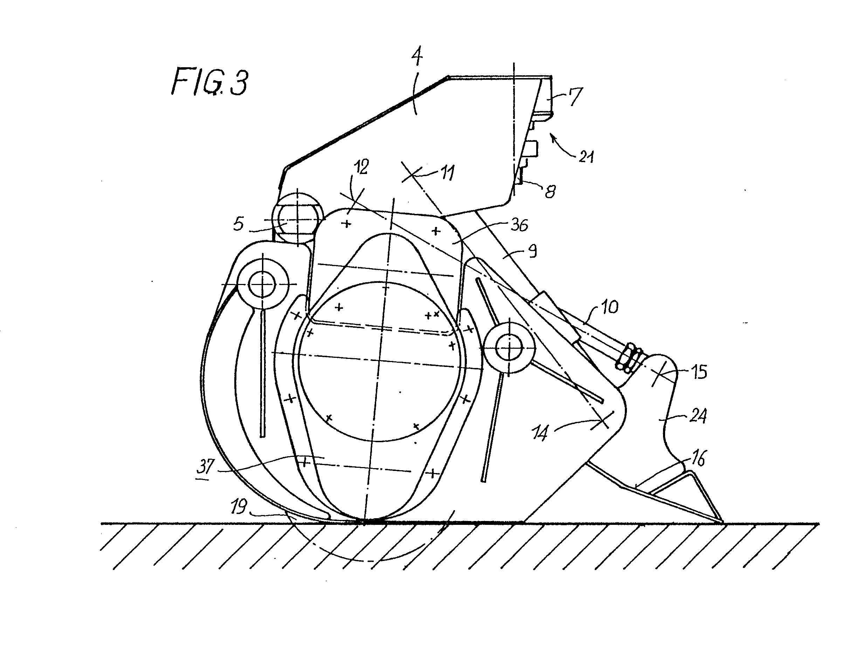

Fig. 3 eine Ansicht des Bodenbearbeitungsgerätes in Richtung des Pfeiles III in Fig. 1,

Fig. 4 einen der Fig. 2 entsprechenden Schnitt in gegenüber Fig. 2 vergrößertem Maßstab, wobei sich die Bodenlockerungsvorrichtung des Bodenbearbeitungsgerätes in Arbeitsstellung befindet,

Fig. 5 einen der Fig. 4 entsprechenden Schnitt, jedoch bei hochgeschwenkter Bodenlockerungsvorrichtung, und

Fig. 6 ein Detail aus Fig. 1 in gegenüber Fig. 1 vergrößertem Maßstab.

In der Zeichnung ist mit 17 ein Zugfahrzeug für das erfindungsgemäße Bodenbearbeitungsgerät bezeichnet. Das Bodenbearbeitungsgerät ist über einen Kupplungsbalken 1 - schwenkbar an das Zugfahrzeug 17 anschließbar, wobei zur Änderung der Lage des Kupplungsbalkens 1 und damit auch des erfindungsgemäßen Bodenbearbeitungsgerätes ein Kolben/Zylinderaggregat 22 vorgesehen ist. Der Kolben bzw. die Kolbenstange dieses Kolben/Zylinderaggregates greift hiebei an einer Lasche 32 des Kupplungsbalken 1 an. Der Zylinder des Kolben/Zylinderaggregates 22 ist dabei - schwenkbar am Rahmen des Zugfahrzeuges gelagert.

Mit dem Halter 1 ist über ein elastisches Gelenk 2 ein Halter 3 verbunden, mit dem die Bodenlockerungsvorrichtung 19 und das Glättbrett 16 in Verbindung stehen. Das elastische Gelenk 2 ermöglicht eine Pendelbewegung des Halters 3 um die Längsachse 33 des Kupplungsbalkens 1, wodurch sich die Bodenlockerungsvorrichtung 19 und das Glättbrett 16 an Schräglagen des befahrenen Feldes anpassen können. Als Bodenlockerungsvorrichtung 19 kann eine Fräse eingesetzt werden. Das erfindungsgemäße Bodenbearbeitungsgerät kann auch zur Bearbeitung von Skipisten vorteilhaft eingesetzt werden, wobei die Fräse die Aufgabe hat, den Boden, z.B. Eisplatten, zu lockern und oberflächlich aufzubereiten, wonach dann eine Einebnung mittels des Glättbrettes erfolgt und dadurch eine einwandfreie Pistenoberfläche hergestellt werden kann.

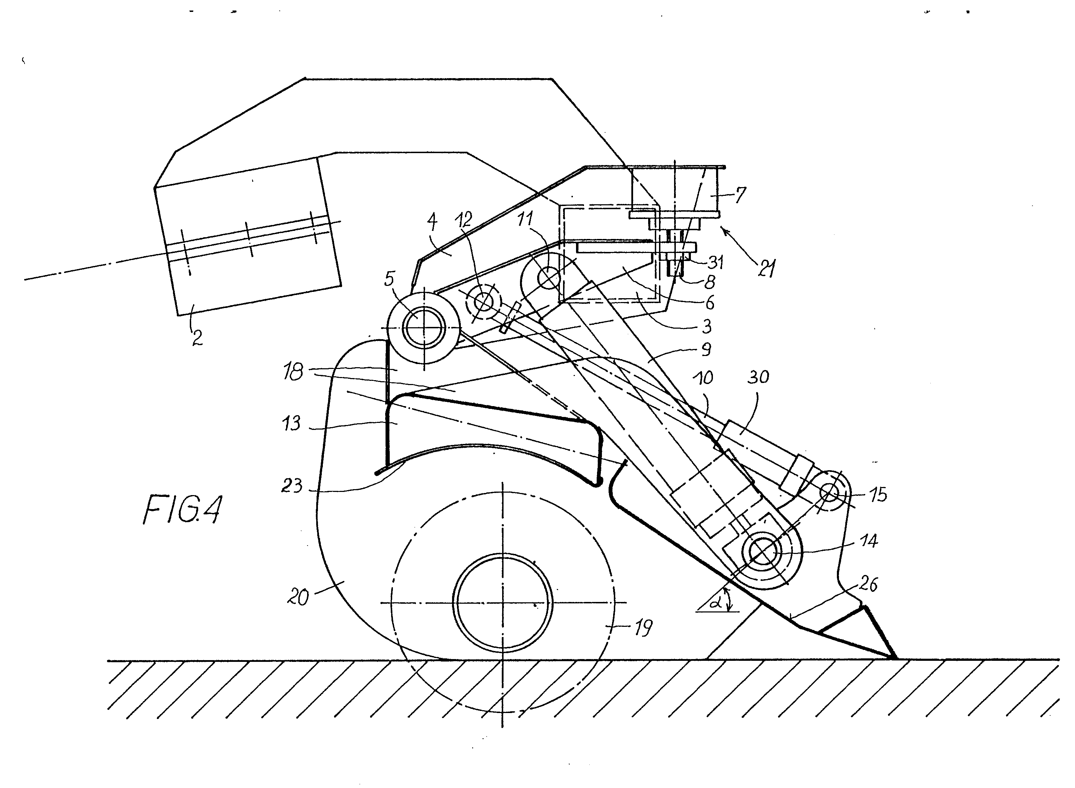

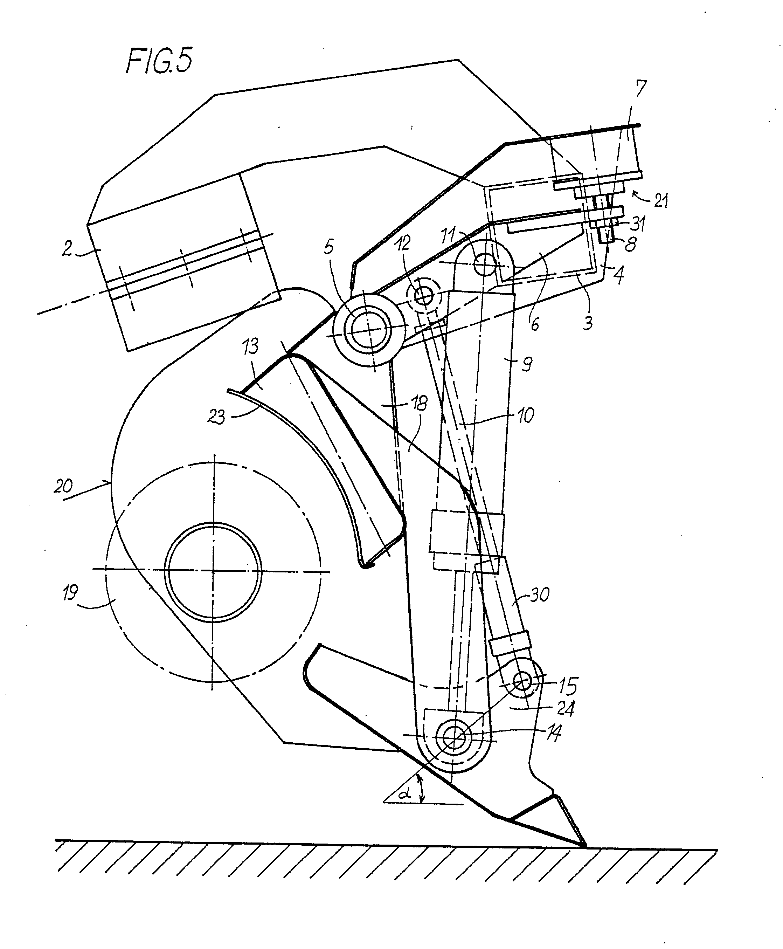

Die Bodenlockerungsvorrichtung 19 ist über ein Schwenklager 14 mit dem Glättbrett 16 verbunden, wobei die Bodenlockerungsvorrichtung 19 um das Lager 14 aus der in Fig. 4 ersichtlichen Lage in die Lage nach Fig. 5 hochgeschwenkt werden kann und solchart aus einer wirksamen (Arbeitsstellung) in eine unwirksame Stellung - (Ruhestellung) gelangt. In der Ruhestellung liegt die Bodenlockerungsvorrichtung 19 im Abstand vom Boden.

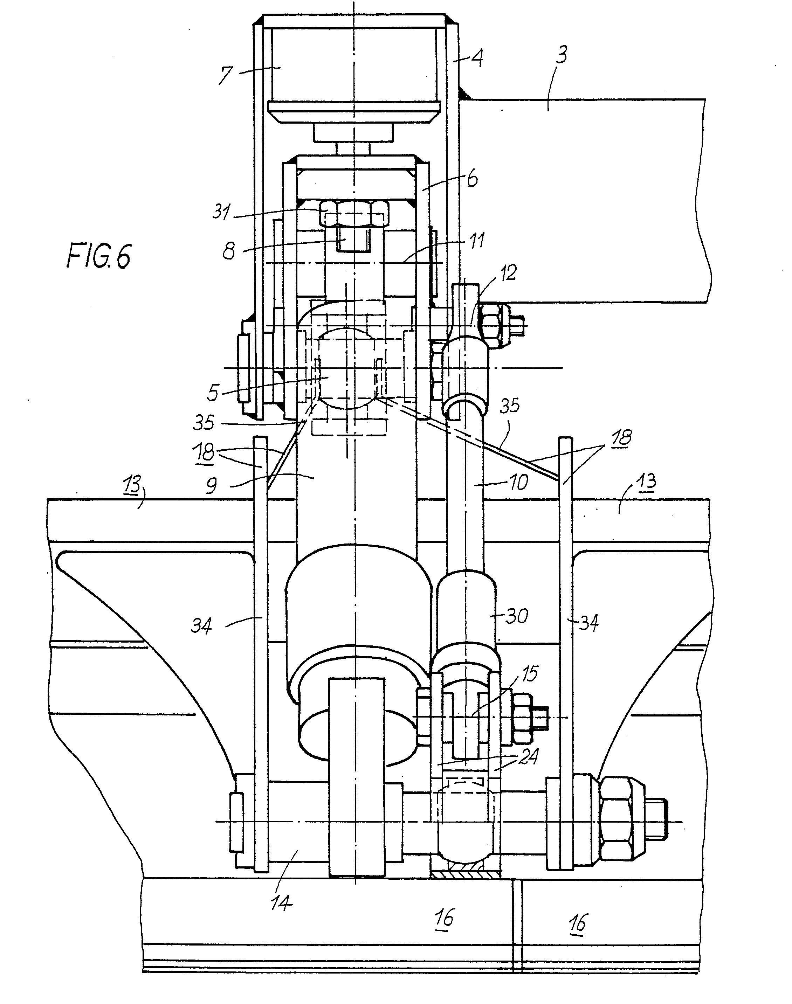

Die Bodenlockerungsvorrichtung 19 ist mit einer Kurbel 18 eines Gelenksvierecks fest verbunden. Die Kurbel 18 wird hiebei von zwei Rippen 34 und je einem von jeweils einer Rippe ausgehenden Verbindungsblech 35 gebildet, die mit einem als Kugelgelenklager ausgebildeten Hauptlager 5 verbunden sind (Fig. 6). Die Rippe 34 ist hiebei an einem Kastenträger 13 befestigt, der sich mit seiner Längsachse parallel zur Drehachse der Bodenlockerungsvorrichtung 19 erstreckt und der mit seiner Unterseite eine Schutzhaube 23 für die umlaufende Bodenlockerungsvorrichtung 19 bildet. Diese Schutzhaube 23 deckt die Bodenlockerungsvorrichtung über ihre Länge ab und setzt sich in der Betriebsstellung des Gerätes (Fig. 2 und 4) in dem Glättbrett 16 fort. Die gesamte umfängliche Abdeckung der Bodenlockerungsvorrichtung ist damit unterteilt, wobei ein Teil dieser Abdeckung vom Glättbrett gebildet ist, das relativ zur Schutzhaube 23 bewegbar ist. Das erwähnte Hauptlager 5 der Kurbel 18 ist mit dem Halter 3, der ebenfalls als bevorzugt quadratischen Querschnitt aufweisendes Kastenprofil ausgebildet ist, fest verbunden. Hiebei trägt der Halter 3 an seinen beiden seitlichen Enden eine taschenförmige Konsole 4, die von einem das Hauptlager 5 aufweisenden Zapfen durchsetzt wird (Fig. 6). Die Koppel 24 des Gelenksvierecks ist mit dem Glättbrett 16 fest verbunden, sodaß das Glättbrett bei Bewegung des Gelenksvierecks eine Koppelbewegung ausführt. Das Hauptlager 12 der zweiten Kurbel des Gelenksvierecks, die am Glättbrett 16 angreift, steht ebenfalls mit dem Halter 3 in Verbindung. Diese Verbindung ist bevorzugt justierbar. Zum Zwecke dieser Justierung ist das Hauptlager 12 der Kurbel 10 an einem um die Lagerachse des Hauptlagers 5 der anderen Kurbel 18 des Gelenksvierecks schwenkbaren Hebel 6 befestigt. Der Hebel 6 ist dabei U-förmig ausgebildet, wobei die U-Schenkel um den Zapfen des Hauptlagers 5 - schwenkbar sind. Der Hebel 6 kann nach Ausführung einer Justierbewegung mittels einer als Ganzes mit 21 bezeichneten Feststellvorrichtung fixiert werden.

Durch Schwenken des Hebels 6 kann das Gestell gegenüber dem Halter 3 justiert werden. Das Gelenksviereck ist so dimensioniert und im Bodenbearbeitungsgerät angeordnet, daß innerhalb des Schwenkbereiches des Gelenksvierecks zwischen der Arbeits- und Ruhestellung des Bodenbearbeitungsgerätes die Lage der Koppel 24 des Gelenksvierecks annähernd unverändert bleibt. Lageabweichungen im Bereich von ±5° gegenüber der Sollage können toleriert werden.

Der Längenunterschied zwischen den beiden Kurbeln 18 und 10 des Gelenksvierecks beträgt höchstens 30% der Länge der längeren Kurbel 18, die mit der Bodenlockerungsvorrichtung 19 fest verbunden ist. Die Gestellänge des Gelenksvierecks, d.i. der Abstand der Kurbelhauptlager 5, 12 ist größer als die Länge der Koppel 24, d.i. der Abstand der Kurbelschwenklager 14, 15 am Glättbrett. Das Lager 14 ist dabei bevorzugt als Kugelgelenk ausgebildet, sodaß das Glättbrett 16 pendelnd gehalten wird. In der Arbeitsstellung schließt die Koppel 24 mit einer Bodenparallelen einen Winkel α ein, der bevorzugt 60° beträgt, allgemein jedoch in einem Bereich zwischen 45 und 90° liegen kann.

Die Länge der längeren Kurbel 18, d.i. jene, die mit der Bodenlockerungsvorrichtung 19 fest verbunden ist, beträgt ungeführ das 5 bis 6fache der Länge der Koppel 24 des Gelenksvierecks. Die Länge der zweiten Kurbel 10 kann durch ein Stellglied verändert werden. Durch Verändern der Länge der Kurbel 10 kann dabei die Eindringtiefe der Bodenlockerungsvorrichtung 19 in den Boden fein justiert werden. Als Stellglied eignet sich vor allem ein Hydraulikzylinder 30, jedoch kann auch ein Schraubgetriebe oder ein Spannschloß mit Links/Rechtsgewinde zur Längenänderung vorgesehen werden. Bei Anordnung eines Hydraulikzylinders 30 ist jedoch die Einjustierung der Eindringtiefe der Fräse in einfacher Weise vom Fahrerstand aus steuerbar.

Die Feststellvorrichtung für den Hebel 6, der das Gestell des Gelenksvierecks trägt, weist eine Schraubspindel 8 auf, die den Hebel 6 durchsetzt, wobei auf diese Schraubspindel eine Schraubmutter 31 aufschraubbar ist, die sich am Hebel 6 abstützt. Die Schraubspindel 8 ihrerseits ist an einer Platte befestigt, die an einem Gummipuffer 7 zur Anlage kommen kann, der am Halter 3, d.h. an der taschenförmigen Konsole 4, fixiert ist.

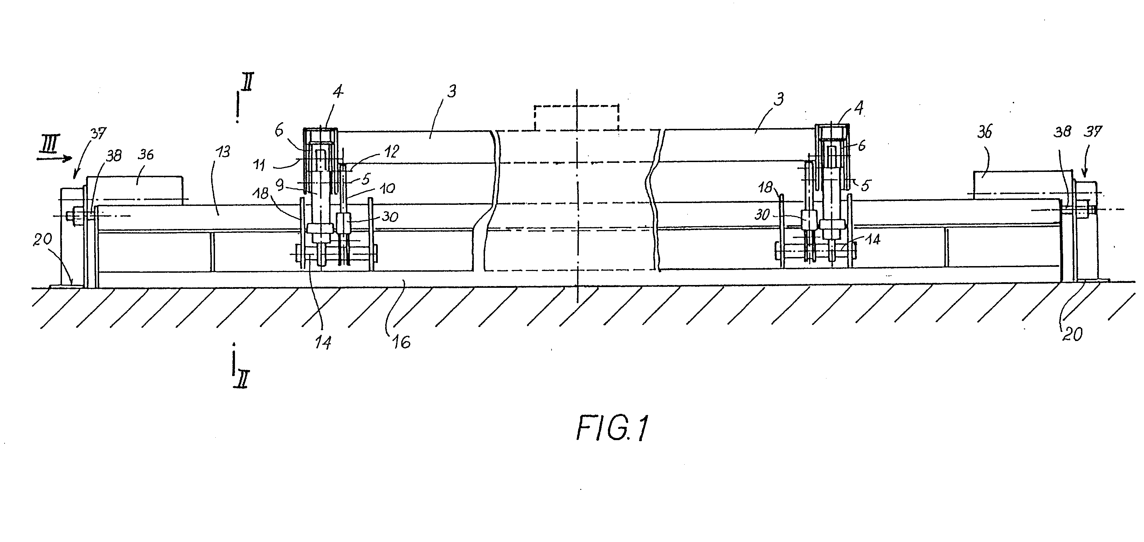

Zum Antrieb der Bodenlockerungsvorrichtung 19 können Hydraulikmotoren 36 (Fig. 1) vorgesehen werden, die über ein Getriebe, das in einem Gehäuse 37 untergebracht ist, die Welle der Bodenlockerungsvorrichtung 19 an ihren beiden Enden antreibt. Das Getriebegehäuse 37 ist mit einer Kufe 20 fest verbunden, die sich am Boden abstützt und seitlich die Bodenlockerungsvorrichtung 19 führt. Das Getriebegehäuse ist über einen Lagerzapfen 38 mit dem Kastenträger 13 verbunden.

Die beiden Hydraulikmotoren 36 sind parallel geschaltet.

Zum Verstellen des Gelenksvierecks dient ein Stellzylinder 9, der über seinen Kolben am Schwenklager 14 der Kurbel 18 und mit seinem Zylinder über ein Gelenk 11 am Hebel 6, der das Gestell des Gelenksvierecks trägt, abgestützt ist.

Die Kinematik ist bei dem erfindungsgemäßen Bodenbearbeitungsgerät so ausgelegt, daß bei Ausfahren des Stellzylinders 9 und Einfahren des Kolben/Zylinderaggregates 22, das die Verbindung zum Zugfahrzeug 17 herstellt, die Bodenlockerungsvorrichtung 19 mit dem Kastenträger 13 in Richtung zum Zugfahrzeug 17, das auch als Kettenfahrzeug ausgebildet sein kann, - schwenkt und sich über die Kurbelschwenklager 14 als Stützgelenk vom Boden abhebt, während das Glättbrett 16 im wesentlichen seine Lage beibehält, wie ein Vergleich der Fig. 4 und 5 zeigt.

## Ansprüche

1. Bodenbearbeitungsgerät, mit einer Bodenlockerungsvorrichtung, die z. B. als Fräse ausgebildet ist, und einem Glättbrett, wobei die Bodenlockerungsvorrichtung und das Glättbrett mit einem ihnen gemeinsamen Halter in Verbindung stehen, der gegebenenfalls mit einem Kupplungsbalken bevorzugt pendelnd verbunden ist, der seinerseits mit einem Zugfahrzeug auf- und abschwenkbar kuppelbar ist, wobei die Bodenlockerungsvorrichtung über ein Schwenklager mit dem Glättbrett verbunden ist und durch Schwenken um dieses Lager aus der Arbeitsstellung in eine Ruhestellung bewegbar ist, in der sich die Bodenlockerungsvorrichtung im Abstand vom Boden befindet, dadurch gekennzeichnet, daß die Bodenlockerungsvorrichtung (19) mit einer (18) der beiden Kurbeln (18, 10) eines Gelenksvierecks fest verbunden ist, wobei das Hauptlager (5) dieser Kurbel (18) mit dem Halter (3), bevorzugt fest, verbunden ist, daß das Glättbrett (16) mit der Koppel (24) dieses Gelenksvierecks fest verbunden ist, und daß das Hauptlager (12) der zweiten am Glättbrett (16) angreifenden Kurbel (10) des Gelenksvierecks bevorzugt justierbar im Halter (3) angeordnet ist.

2. Bodenbearbeitungsgerät nach Anspruch 1, dadurch gekennzeichnet, daß das justierbar im Halter (3) angeordnete Hauptlager (12) der Kurbel (10) an einem, bevorzugt um die Lagerachse des Hauptlagers (5) der anderen Kurbel, (18) des Gelenksvierecks, schwenkbaren Hebel (6) befestigt ist, der im Halter (3) durch eine Feststelleinrichtung (21) fixierbar ist.

3. Bodenbearbeitungsgerät nach Anspruch 1 oder 2, dadurch gekennzeichnet, daß innerhalb des Schwenkbereiches des Gelenksvierecks zwischen Arbeits- und Ruhestellung des Bodenbearbeitungsgerätes, die Lage der Koppel (24) des Gelenksvierecks annähernd unverändert bleibt, wobei bevorzugt die Lageabweichung ±5° nicht überschreitet.

4. Bodenbearbeitungsgerät nach einem der Anprüche 1 bis 3, dadurch gekennzeichnet, daß der Längenunterscheid zwischen den beiden Kurbeln (18, 10) des Gelenksvierecks höchstens 30 % der Länge der längeren, die Bodenbelockerungsvorrichtung (19) tragenden Kurbel (18) beträgt.

5. Bodenbearbeitungsgerät nach einem der Ansprüche 1 bis 4, dadurch gekennzeichnet, daß die Gestellänge - (Abstand der Kurbelhauptlager (5, 12) des Gelenksvierecks größer als die Koppellänge (Abstand der Kurbelschwenklager (14, 15) am Glättbrett (16) ist.

6. Bodenbearbeitungsgerät nach einem der Ansprüche 1 bis 5, dadurch gekennzeichnet, daß in der Arbeitsstellung der Bodenlockerungsvorrichtung (19) die Koppel (24) mit einer Bodenparallelen einen Winkel (α) ein- schließt, der im Bereich zwischen 45° und 90° liegt, bevorzugt etwa 60° beträgt.

7. Bodenbearbeitungsgerät nach einem der Ansprüche 1 bis 6, dadurch gekennzeichnet, daß die Länge der längeren Kurbel (18) ungefähr das 5 bis 6fache der Länge der Koppel (24) beträgt.

8. Bodenbearbeitungsgerät nach einem der Ansprüche 1 bis 7, dadurch gekennzeichnet, daß die Länge der zweiten, nicht die Bodenlockerungsvorrichtung (19) tragenden Kurbel (10) veränderbar ist.

9. Bodenbearbeitungsgerät nach Anspruch 8, dadurch gekennzeichnet, daß zur Längenänderung der zweiten Kurbel (10) ein Stellglied z.B. ein Hydraulikzylinder (30), vorgesehen ist.

10. Bodenbearbeitungsgerät nach Anspruch 2, dadurch gekennzeichnet, daß die Feststellvorrichtung (21) eine den das eine Kurbelhauptlager (12) tragenden Hebel (6) durchsetzende Schraubspindel (8) aufweist, auf welche eine am Hebel (6) abgestützte Schraubmutter (31) schraubbar ist.

11. Bodenbearbeitungsgerät nach Anspruch 10, dadurch gekennzeichnet, daß die Schraubspindel (8) an einem Gummipuffer (7) befestigt ist, der seinerseits am Halter (3) fixiert ist.

FIG.1

FIG.2

0 191 014

FIG.3

0 191 014

FIG.4

4 12 11

7

5 31

8

21

6

3

9

18 10 30

13

23 15

14

20 26

19 α

0 191 014

FIG.5

FIG.6